# EUROPÄISCHE PATENTANMELDUNG

(11) **EP 2 990 357 A1**
(43) Veröffentlichungstag der Anmeldung: **02.03.2016**
(21) Anmeldenummer: 15167930.5
(22) Anmeldetag: 18.05.2015
(51) Int. Cl.: B65F 3/20, F16C 11/02, F16C 33/10

(54) **MÜLLFAHRZEUG MIT EINER SCHMIERVORRICHTUNG UND BOLZEN**

(30) Priorität: 27.08.2014 DE 202014006920 U
(71) Anmelder: FAUN Umwelttechnik GmbH & Co. KG, 27711 Osterholz-Scharmbeck (DE)
(72) Erfinder: Kirchhoff, Dr. Johannes F., 58636 Iserlohn (DE); Hoese, Jörg, 27721 Ritterhunde (DE); Klossek, Johannes, 58640 Iserlohn (DE)
(74) Vertreter: Laufhütte, Dieter

(57) **Zusammenfassung**

Die Erfindung betrifft ein Müllfahrzeug (1) mit wenigstens einem ersten beweglichen Teil (2) und einem wenigstens einem zweiten beweglichen Teil (3) zum Verdichten von Materie, wobei das erste bewegliche Teil (2) und das zweite bewegliche Teil (3) mittels wenigstens eines Bolzens (4) verschwenkbar miteinander verbunden sind, wobei in dem Bolzen (4) wenigstens eine Schmierbohrung (5) vorgesehen ist, die dazu ausgelegt ist, Schmiermittel zwischen einem axial außen am Bolzen (4) vorgesehenen Zulauf (6) und einem axial mittig am Bolzen (4) vorgesehen Ablauf (7) leiten.

## Beschreibung

Die vorliegende Erfindung betrifft ein Müllfahrzeug mit einer Schmiervorrichtung sowie einen entsprechenden Bolzen für die Schmiervorrichtung des Müllfahrzeugs.

Müllfahrzeuge bzw. Müllwagen sind aus dem Stand der Technik bekannt und dienen zum Transport und/oder zur Zerkleinerung von unterschiedlichen Arten von Abfällen und/oder Wertstoffen. Bekannte Müllfahrzeugsysteme umfassen dabei Rotopresssysteme, bei denen am Müllfahrzeug eine drehende Trommel vorgesehen ist, in der Abfälle bzw. Wertstoffe mittels einer Förderschnecke in einen Transportbehälter des Müllfahrzeugs befördert und ggf. zerkleinert werden.

Ein alternatives Müllfahrzeugsystem ist ein so genanntes Pressplattensystem, bei dem Abfälle bzw. Wertstoffe mittels eines ersten beweglichen Teil innerhalb des Müllfahrzeugs verdichtet werden.

Bei den bekannten Müllfahrzeugen liegen dabei zum Teil umfangreiche bewegliche mechanische Systeme vor, die entsprechende Schmiervorrichtungen zum korrekten Betrieb aufweisen müssen.

Problematisch an aus dem Stand der Technik bekannten Müllfahrzeugen ist, dass Leitungen der Schmiervorrichtungen in den Bereichen des Müllfahrzeugs angeordnet sind, in welchen die Leitungen im Betrieb des Müllfahrzeugs durch beispielsweise Müll, unsachgemäße Handhabung oder Kontakt mit Bauteilen beschädigt werden können.

Aufgabe der vorliegenden Erfindung ist es daher, ein verbessertes Müllfahrzeug bereitzustellen, bei dem das Risiko der Beschädigung von Leitungen der Schmiervorrichtungen verringert ist.

Diese Aufgabe wird erfindungsgemäß durch ein Müllfahrzeug mit den Merkmalen des Anspruchs 1 gelöst, d.h. durch ein Müllfahrzeug mit wenigstens einem ersten beweglichen Teil und wenigstens einem zweiten beweglichen Teil zum Verdichten von Materie, wobei das erste bewegliche Teil und das zweite bewegliche Teil mittels wenigstens eines Bolzens verschwenkbar miteinander verbunden sind, wobei in dem Bolzen wenigsten eine Schmierbohrung vorgesehen ist, die dazu ausgelegt ist, Schmiermittel zwischen einem axial außen am Bolzen vorgesehenen Zulauf und einem axial mittig am Bolzen vorgesehenen Ablauf zu leiten.

Vorteilhafterweise kann so der Bolzen als Teil der Schmiervorrichtung bzw. der Schmiermittelleitung genutzt werden. Bevorzugt kann dabei Schmiermittel von dem axial außen am Bolzen vorgesehenen Zulauf zu dem axial mittig am Bolzen vorgesehenen Ablauf geleitet werden. Denkbar ist aber auch eine zusätzliche oder alternative umgekehrte Schmiermittelleitung. Somit kann in dem Bereich des Bolzens auf außenliegende Schmiermittelleitungen verzichtet werden. Die so in den Bolzen verlagerten Schmiermittelleitungen sind dabei weniger für die oben genannten Beschädigungen anfällig. Mit Materie kann Müll gemeint sein, es können aber auch Wertstoffe oder sonstige Materialien gemeint sein, die von dem erfindungsgemäßen Müllfahrzeug verladen werden.

In einem bevorzugten Ausführungsbeispiel ist dabei denkbar, dass die Schmierbohrung stirnseitig am Bolzen innerhalb des zweiten beweglichen Teils an wenigstens eine Schmierzuleitung angeschlossen ist.

Schmiermittel kann dabei beispielsweise von einer zentralen Schmiermittelversorgung mit entsprechender Pumpe axial von außen nach innen in den Bolzen eingeführt werden. Aus dem Bolzen kann dann das Schmiermittel dann weiter zu Schmierbereichen geleitet werden, die axial weiter außen am Bolzen liegen. Der Zulauf kann dabei an einer Seite des Bolzens angeordnet sein, welche in Richtung auf die Fahrzeugmitte des Müllfahrzeugs ausgerichtet ist. Der Zulauf kann sich dabei zumindest zum Teil in einer zylinderförmigen Aussparung des zweiten beweglichen Teils befinden. Auch Teile der Schmiermittelfüllung von der zentralen Schmiermittelversorgung zum Bolzen können innerhalb der zylinderförmigen Aussparung des zweiten beweglichen Teils angeordnet sein.

In einem weiteren bevorzugten Ausführungsbeispiel ist denkbar, dass die Schmierbohrung wenigstens einen axial äußeren Bereich des Bolzens mit Schmiermittel versorgt, und/oder dass der Bolzen fest in dem ersten beweglichen Teil gelagert ist.

Vorteilhaft können so eine oder mehrere axial äußere Bereiche des Bolzens mit Schmiermittel versorgt werden, wobei die Schmiermittelführung innerhalb des zweiten beweglichen Teils geschützt erfolgen kann. Ferner kann der Bolzen so ausgebildet sein, dass er fest in dem zweiten beweglichen Teil gelagert ist und relativ zu dem zweiten beweglichen Teil verschwenkbar ist. Somit kann eine verschwenkbare Lagerung von dem ersten beweglichen Teil und dem zweiten beweglichen Teil mittels des Bolzens realisiert werden. Durch die feste Lagerung des Bolzens innerhalb der d ist es ferner möglich Schmierleitungen einfach von dem axial mittigen Bereich des Bolzens zu dem ersten beweglichen Teil bereit zu stellen, wobei zwischen dem axial mittigen Bereich des Bolzens und des ersten beweglichen Teils hierbei keine Relativbewegungen beim Verschwenken der Vorrichtung auszugleichen sind.

In einem weiteren bevorzugten Ausführungsbeispiel ist denkbar, dass wenigstens eine Schmierleitung an dem ersten beweglichen Teil angeordnet ist, und/oder dass wenigstens ein Schmierverteiler an dem ersten beweglichen Teil angeordnet ist.

Vorteilhaft kann über die Schmierleitung Schmiermittel aus dem Bolzen zu weiteren Schmiermittelverbrauchern geleitet werden. Dabei ist die Schmierleitung kürzer und dadurch weniger anfällig für mechanische Beeinflussungen bzw. Beschädigungen als die aus dem Stand der Technik bekannten Schmierleitungen. Die Schmierleitung kann auch als verwindungssteifes Bauteil bzw. Rohr ausgeführt sein. Mittels eines Schmierverteilers kann ferner vorteilhaft das Schmiermittel an weitere Schmiermittelverbraucher bzw. Schmiermittelverbrauchsstellen geleitet werden.

In einem weiteren bevorzugten Ausführungsbeispiel ist denkbar, dass die Schmierleitung und/oder der Schmierverteiler mittels einer Abdeckung geschützt sind.

Vorteilhaft kann so das Beschädigen der genannten Komponenten durch unsachgemäße Handhabung oder Kollision mit Gegenständen, Teilen der Mechanik der Vorrichtung oder Abfall vermieden werden. In einem weiteren bevorzugten Ausführungsbeispiel ist denkbar, dass ein weiterer Bolzen zum Koppeln einer Kolben-Zylinder-Vorrichtung mit dem ersten beweglichen Teil vorgesehen ist, wobei der weitere Bolzen eine Schmierung umfasst, die mit der Schmierbohrung kommuniziert.

Die Kolben-Zylinder-Vorrichtung kann dabei zum Bewegen des ersten beweglichen Teils und/oder des zweiten beweglichen Teils, insbesondere relativ zueinander, dienen. Durch die beschriebene Ausgestaltung der Schmierung der Kolben-Zylinder-Vorrichtung ist es möglich, besagten weiteren Bolzen ebenfalls über den erfindungsgemäß vorgesehenen ersten Bolzen zu schmieren.

Die vorliegende Erfindung richtet sich auch auf einen Bolzen für ein Müllfahrzeug nach einem der Ansprüche 1 bis 6, wobei der Bolzen wenigstens zwei Bereiche mit unterschiedlichen Durchmessern umfasst.

Über die wenigstens zwei Bereiche unterschiedlicher Durchmesser ist es vorteilhaft möglich, eine Kopplung des Bolzens mit zwei Bauteilen zu bewirken, wobei der Bolzen mit einem Bauteil verschwenkbar und mit dem anderen Bolzen nicht verschwenkbar gekoppelt sein kann.

In einem besonderen Ausführungsbeispiel des Bolzens ist dabei denkbar, dass der Bolzen einen axialen mittleren Bereich und zwei axial äußere Bereiche umfasst, wobei der axial mittlere Bereich einen größeren Durchmesser aufweist als die axial äußeren Bereiche.

Über die axial äußeren Bereiche mit geringerem Durchmesser als der axial mittlere Bereich ist es möglich, den Bolzen verschwenkbar mit einem oder mehreren Bauteilen wie dem zweiten beweglichen Teil zu koppeln. Relativ zum Bolzen unbeweglich kann der Bolzen dabei über den axial mittleren Bereich mit einem oder mehreren Bauteilen wie dem ersten beweglichen Teil gekoppelt werden. Allgemein ist aber auch eine Ausführung denkbar, bei der die axial äußeren Bereiche des Bolzens relativ unbeweglich mit einem Bauteil oder mit mehreren Bauteilen verbunden sind und der axial innere Bereich relativ bewegbar mit einem anderen Bauteil oder mit anderen Bauteilen verbunden ist.

In einem weiteren Ausführungsbeispiel kann vorgesehen sein, dass wenigstens drei voneinander getrennte, im Wesentlich axial verlaufende Schmierbohrungen vorgesehen sind, von denen eine mit einem stirnseitig am Bolzen vorgesehenen Zulauf und an einem im Wesentlichen axial mittig vorgesehenen Ablauf kommuniziert, und von denen die anderen mit im Wesentlichen axial außen vorgesehenen Schmieröffnungen und mit im Wesentlichen axial mittig vorgesehenen Nebenzuläufen kommunizieren.

Durch entsprechende, bedarfsgemäße Anordnung von weiteren Schmierbohrungen ist es somit möglich, unterschiedliche Bereiche des Bolzens mit Schmiermittel zu versorgen. Die im Wesentlichen in axialer Richtung verlaufende Anordnung der Schmierbohrungen vereinfacht dabei die Herstellung des entsprechenden Bolzens.

In einem weiteren Ausführungsbeispiel ist es möglich, dass die Schmieröffnungen mit je wenigstens einem im Wesentlichen radial verlaufenden Schmieröffnungszulauf kommunizieren. Die Schmieröffnungszuläufe gewährleisten dabei die Kommunikation zwischen Schmieröffnungen und Schmierbohrungen, wodurch entsprechende Bereiche des Bolzens mit Schmiermittel versorgbar sind.

Weitere Einzelheiten und Vorteile der Erfindung werden anhand des in den Figuren aufgezeigten Ausführungsbeispiels erläutert. Dabei zeigen:
- Figur 1:: Müllfahrzeug mit Schmiervorrichtung gemäß dem Stand der Technik;
- Figur 2:: Detail der Schmiervorrichtung eines Müllfahrzeugs; und
- Figur 3:: Schnittbild einer erfindungsgemäßen Vorrichtung.

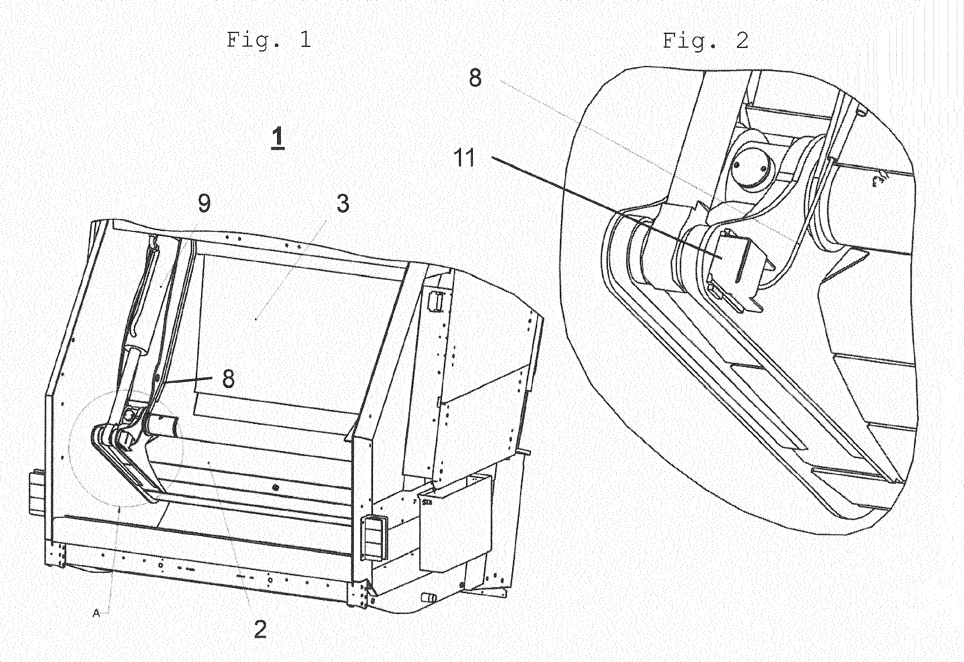

Figur 1 zeigt den hinteren Bereich eines Müllfahrzeugs 1 mit einem ersten beweglichen Element, im vorliegenden Beispiel einer Pressplatte 2, und einem zweiten beweglichen Element, im vorliegenden Beispiel einer Trägerplatte 3, wobei Pressplatte 2 und Trägerplatte 3 mittels einer Kolbenzylindervorrichtung 9 relativ zueinander bewegbar sind. In aus dem aus dem Stand der Technik bekannten Müllfahrzeugen 1 verläuft dabei eine Schmierleitung 8 im Bereich von Pressplatte 2 und/oder Trägerplatte 3. Die Schmierleitung 8 dringt damit in einen Bereich vor, in dem sowohl Relativbewegungen von mechanischen Teilen erfolgen als auch Belade- und Entladevorgänge des Müllfahrzeugs 1 stattfinden können. Problematischerweise treten dabei Beschädigungen der Schmierleitung 8 aufgrund von ungewollten Kontakten von Müll oder anderen Gegenständen mit der Schmierleitung 8 auf.

Figur 2 zeigt das Detail A aus Figur 1, wobei ein freiliegender Teil der Schmierleitung 8 zu sehen ist. Zu erkennen ist dabei, dass die Schmierleitung 8 zur Versorgung der Lagerstelle der Kolben-Zylinder-Vorrichtung 9 bzw. des Pressplattenzylinders 9 bereitgestellt ist. Die Schmierstoffversorgung erfolgt dabei beispielsweise über eine zentrale Schmieranlage, wobei in der Regel über die im Bereich der Drehbewegung zwischen Träger- und Pressplatte 3, 2 freiliegende Leitung geschmiert wird. Hierdurch können Drehbewegungen zwischen den Platten ausgeglichen werden.

Bei Pressplatten-Abfallsammelfahrzeugen ist eine Positionierung der Leitung 8 in der Regel nur im nach hinten weisenden Bereich möglich, da sich seitlich die Heckteilwände befinden und im vorderen Bereich der Abfall verdichtet wird. In dem nach hinten weisenden Bereich im Heckteil findet aber die Beladung statt, und es besteht die Gefahr, dass die Schmierleitungen bzw. Schmierableitungen 8 durch den eingefüllten Abfall beschädigt werden.

Gemäß dem hier gezeigten Stand der Technik werden somit die Leitungen 8 über den Drehpunkt zwischen Träger- und Pressplatte 3,2 "frei fliegend" bzw. ungeschützt und/oder flexibel verlegt. Die Leitungen 8 werden in der Regel in flexiblen Schläuchen oder Stahlspiralen verlegt, um die eigentliche Leitung 8 vor Beschädigungen zu schützen. Da sich die Leitungen 8 aber aufgrund der erforderlichen Bewegungsfreiheit nicht komplett abdecken lassen, können diese abgerissen werden, wenn sich beispielsweise zu befördernder Abfall hinter den Schmierleitungen 8 verfängt.

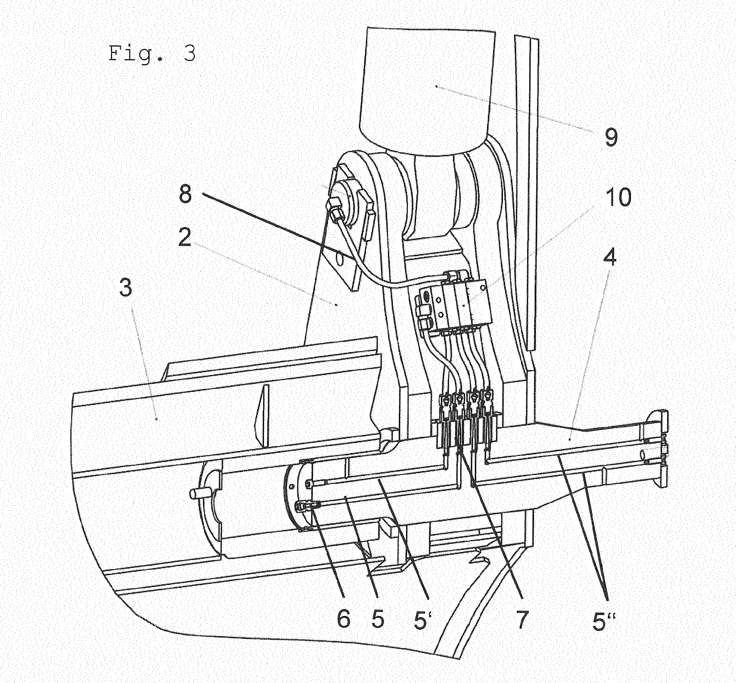

Zur Lösung dieses Problems zeigt Figur 3 die Führung von Schmierleitungen innerhalb des Verbindungsbolzens bzw. Bolzens 4 zwischen Träger- und Pressplatte 3, 2, wobei hier die Leitungen vor allen oder vor nahezu allen Umwelteinflüssen, insbesondere vor einzufüllendem Abfall, geschützt sind und nicht ohne Weiteres beschädigt werden können.

Um eine frei fliegende Leitung 8, wie sie im Stand der Technik vorkommt, zu vermeiden und einen erhöhten Schutz der Leitung 8 zu realisieren, kann die Schmierleitung bzw. Schmierableitung 8 fest an der Pressplatte 2 verlegt und mit einer entsprechenden, in Figur 3 nicht gezeigten Abdeckung 11 geschützt sein. Diese Abdeckung 11 kann beispielsweise wie im Stand der Technik gemäß Figur 2 gezeigt ausgeführt sein, wobei sie allerdings die gesamte Schmierleitung 8 bedecken kann. Die Schmierleitung 8 wird im gezeigten Ausführungsbeispiel der Figur 3 über einen Schmierverteiler 10 an den in der Pressplatte 2 fest gelagerten Bolzen 4 angeschlossen. Dieser Bolzen 4 hat entsprechende Schmierbohrungen 5, 5', 5", wobei an die Schmierbohrung 5 über einen Zulauf 6 des Bolzens 4 stirnseitig innerhalb der Trägerplatte 3 weiterführende Schmierleitungen angeschlossen werden können. Axial mittig kann ferner am Bolzen 4 ein Ablauf 7 vorgesehen sein, über den der Schmierverteiler 10 und/oder weitere Schmiermittelverbraucher über den Bolzen 4 mit Schmiermittel versorgbar sind. Der Ausgleich der Drehbewegung zwischen Pressplatte 2 und Trägerplatte 3 erfolgt mit diesen weiterführenden Leitungen innerhalb der Trägerplatte 3, beispielsweise in einer zylinderförmigen Durchführung oder Aussparung, womit die weiterführenden Leitungen ebenfalls vor allen Umwelteinflüssen geschützt sind.

Vorteilhaft werden so zum einen die Leitungen nicht mehr beschädigt und weitere Folgeschäden für die Lagerstellen in Folge eines Schmiermangels vermieden. Zum anderen kommt es nicht zu Verunreinigungen der zu befördernden Medien und zu Umweltverschmutzungen durch austretenden Schmierstoff bis zur Entdeckung einer Beschädigung.

## Patentansprüche

1. Müllfahrzeug (1), mit wenigstens einem ersten beweglichen Teil (2) und wenigstens einem zweiten beweglichen Teil (3) zum Verdichten von Materie, wobei das erste bewegliche Teil (2) und das zweite bewegliche Teil (3) mittels wenigstens eines Bolzens (4) verschwenkbar miteinander verbunden sind, wobei in dem Bolzen (4) wenigstens eine Schmierbohrung (5) vorgesehen ist, die dazu ausgelegt ist, Schmiermittel zwischen einem axial außen am Bolzen (4) vorgesehenen Zulauf (6) und einem axial mittig am Bolzen (4) vorgesehenen Ablauf (7) zu leiten.

2. Müllfahrzeug (1) nach Anspruch 1, **dadurch gekennzeichnet, dass** die Schmierbohrung (5) stirnseitig am Bolzen (4) innerhalb des zweiten beweglichen Teils (3) an wenigstens eine Schmierzuleitung angeschlossen ist.

3. Müllfahrzeug (1) nach Anspruch 1 oder 2, **dadurch gekennzeichnet, dass** die Schmierbohrung wenigstens einen axial äußeren Bereich des Bolzens (4) mit Schmiermittel versorgt, und/oder dass der Bolzen (4) fest in dem ersten beweglichen Teil (2) gelagert ist.

4. Müllfahrzeug (1) nach Anspruch 1, 2 oder 3, **dadurch gekennzeichnet, dass** wenigstens eine Schmierleitung an dem ersten beweglichen Teil (2) angeordnet ist, und/oder dass wenigstens ein Schmierverteiler (10) an dem ersten beweglichen Teil (2) angeordnet ist.

5. Müllfahrzeug (1) nach dem Anspruch 4, **dadurch gekennzeichnet, dass** die Schmierleitung und/oder der Schmierverteiler (10) mittels einer Abdeckung (11) geschützt sind.

6. Müllfahrzeug (1) nach einem der vorhergehenden Ansprüche, **dadurch gekennzeichnet, dass** ein weiterer Bolzen zum Koppeln einer KolbenZylinder-Vorrichtung (9) mit dem ersten beweglichen Teil (2) vorgesehen ist, wobei der weitere Bolzen eine Schmierung umfasst, die mit der Schmierbohrung (5) kommuniziert.

7. Bolzen (4) für ein Müllfahrzeug (1) nach einem der Ansprüche 1 bis 6, **dadurch gekennzeichnet, dass** der Bolzen (4) wenigstens zwei Bereiche mit unterschiedlichen Durchmessern umfasst.

8. Bolzen (5) nach Anspruch 7, **dadurch gekennzeichnet, dass** der Bolzen (4) einen mittleren Bereich und zwei axial äußere Bereiche umfasst, wobei der mittlere Bereich einen größeren Durchmesser aufweist als die axial äußeren Bereiche.

9. Bolzen (4) nach Anspruch 7 oder 8, **dadurch gekennzeichnet, dass** wenigstens drei voneinander getrennte, im Wesentlichen axial verlaufende Schmierbohrungen (5, 5', 5") vorgesehen sind, von denen eine mit einem stirnseitig am Bolzen (4) vorgesehenen Zulauf (6) und an einem im Wesentlichen axial mittig vorgesehenen Ablauf (7) kommuniziert, und von denen die anderen mit im Wesentlichen axial außen vorgesehenen Schmieröffnungen und mit im Wesentlichen axial mittig vorgesehenen Nebenzuläufen kommunizieren.

10. Bolzen (4) nach Anspruch 9, **dadurch gekennzeichnet, dass** die Schmieröffnungen mit je wenigstens einem im Wesentlichen radial verlaufenden Schmieröffnungszulauf kommunizieren.
